# EUROPEAN PATENT APPLICATION

(11) **EP 3 121 967 A2**
(43) Date of publication of application: **25.01.2017**
(21) Application number: 16180775.5
(22) Date of filing: 22.07.2016
(51) Int. Cl.: H04B 1/10, H04B 1/26, H03D 7/18, H04H 40/18

(54) **RECEIVING DEVICE**

(30) Priority: 22.07.2015 JP 2015144627
(71) Applicant: Funai Electric Co., Ltd., Daito Osaka 574-0013 (JP)
(72) Inventor: Higashide, Atsushi, Osaka, 574-0013 (JP)
(74) Representative: Becker Kurig Straus

(57) **Abstract**

The disclosure provides a receiving device (21), receiving broadcasts. The receiving device (21) has a frequency setting part (14, 21g, 21f), setting a high-side local oscillating frequency or a low-side local oscillating frequency with respect to predetermined receiving frequency bands to be received.

## Description

### CROSS-REFERENCE TO RELATED APPLICATION

This application claims the priority benefit of Japan application serial no. 2015-144627, filed on July 22, 2015. The entirety of each of the above-mentioned patent applications is hereby incorporated by reference herein and made a part of this specification.

### BACKGROUND OF THE DISCLOSURE

### Field of the Disclosure

The disclosure relates to a receiving apparatus that receives a broadcast.

### Description of Related Art

In a superheterodyne receiving apparatus, an RF (radio frequency) band-pass filter is disposed at an input path of a mixer and an IF (intermediate frequency) low-pass filter is disposed at an output path of the mixer in order to reduce frequency band components other than receiving channel to be received. However, there are cases where this may not be sufficient when a signal strength of an adjacent channel is large.

Patent document 1 (Japanese Patent Laid-Open No. 2011-82669) discloses an example where fine tuning is implemented by varying a local oscillating frequency that is inputted to the mixer.

Patent document 2 (Japanese Patent Laid-Open No. 2001-102947) discloses an example where the effect of an adjacent channel is reduced by disposing an LNA (low noise amplifier) at an input path of a mixer, or by adjusting a gain of an amplifier that is disposed at an output path of the mixer.

The disclosures of patent documents 1 and 2, for the most part, could not deal with cases where the signal strength of the adjacent channel is very large.

In addition, in the example shown in patent document 1, the frequency band of an IF signal that is obtained from the mixer is also affected when the local oscillating frequency is varied. Therefore, it is required to compensate for this effect.

### SUMMARY OF THE DISCLOSURE

The disclosure reduces an effect of an adjacent channel that has a large signal strength.

The disclosure provides a receiving device for receiving broadcasts. The receiving device comprises a frequency setting part, setting a high-side local oscillating frequency or a low-side local oscillating frequency with respect to predetermined receiving frequency bands to be received

For example, a superheterodyne receiving device mixes signals of different frequencies with respect to the predetermined receiving frequency band that is to be received. Even though it is a frequency at the low-side or the high-side of the receiving frequency band that is to be received, however it is fixed to one or the other due to they are different frequencies.

In the aforementioned configuration, the frequency setting part sets the high-side or the low-side local oscillating frequency with respect to the predetermined receiving frequency band to be received.

In a case when the local oscillating frequency is made to be a frequency at the high-side of the predetermined receiving frequency band to be received, an IF signal will include a signal with a receiving frequency band that sandwiches the local oscillating frequency. Therefore, in a case where a signal with a strong signal level is present in a region adjacent to the predetermined receiving frequency band to be received, by setting the local oscillating frequency to being at an opposite side relative to the strong signal, the IF signal is less susceptible to being affected by the strong signal. More specifically, in a case where a signal with a strong signal level is present in a region adjacent to the high-side (high frequency side) of the predetermined receiving frequency band to be received, the effect of the strong signal appears shifted to a higher frequency side than the signal of the predetermined receiving frequency band to be received by setting the local oscillating frequency to the low-side (low frequency side). Therefore, the signal of the predetermined receiving frequency band to be received and the strong signal do not overlap. If, in this example, the local oscillating frequency is set to the high-side (high frequency side), then the strong signal appears overlapped with the signal of the predetermined receiving frequency band to be received, and it will be difficult to separate the signal of the predetermined frequency band to be received.

Conversely, in a case where a signal with a strong signal level is present in a region adjacent to the low-side (low frequency side) of the predetermined receiving frequency band to be received, the effect of the strong signal appears shifted to a lower frequency side than the signal of the predetermined receiving frequency band to be received by setting the local oscillating frequency to the high-side (high frequency side). Therefore, the signal of the predetermined receiving frequency band to be received and the strong signal do not overlap.

As another embodiment of the disclosure, the predetermined frequency band is set for each channel and a local oscillating frequency corresponding to the each channel is set in or between the frequency bands. The local oscillator frequency setting part sets the local oscillating frequency to a low-side or the local oscillator frequency to a high-side for each channel.

In broadcast waves and the like, predetermined receiving frequency bands are separated by a predetermined frequency and a channel number is assigned to each, a receiving frequency band is set for each channel and a local oscillating frequency corresponding to each of the channels is set for each channel. In this case, a predetermined channel corresponds to a local oscillator frequency one by one.

In the aforementioned configuration, the frequency setting part sets the low-side local oscillating frequency or the high-side local oscillating frequency for each channel. More specifically, focusing on a particular channel, when the signal level at the high frequency side of the channel is strong, if the local oscillating frequency at the high-side is used, then a signal at the high frequency side of the channel which sandwiches the local oscillating frequency overlaps with the signal of the channel being focused on. Of course, a band-pass filter corresponding to the receiving frequency band of the channel being focused on is used, however if the signal level of the original signal is too strong, the signal level cannot be reduced sufficiently. As a result, the signal component at the high frequency side of the channel cannot be separated.

However, in that case, if the local oscillating frequency of the low-side of the channel being focused on is used, then the signal at the high frequency side of the channel that is away from this local oscillating frequency does not overlap with the signal of the channel being focused on.

That is to say, the effect of the signal level of the adjacent channel may be reduced by setting the high-side local oscillating frequency or the low-side local oscillating frequency for each of the channels according to the strength of the signal level of the adjacent channel.

As another embodiment of the disclosure, the receiving device comprises an signal level detecting part, detecting a signal level of a receiving signal of an adjacent channel with respect to a channel to be received; and a signal level determining part, determining whether the signal level detected by the signal level detecting part is larger than a predetermined value. The frequency setting part sets the high-side local oscillating frequency or the low-side local oscillating frequency for each channel according to a determination result of the signal level determination part.

As another embodiment of the disclosure, when the signal level determination part determines that the signal level of the adjacent channel is larger than the predetermined value, the frequency setting part sets the local oscillating frequency to being at an opposite side relative to the adjacent channel.

In the aforementioned configuration, the signal level detecting part detects a signal level of a receiving signal of an adjacent channel with respect to a channel to be received, therefore the signal level determining part determines whether the signal level detected by the signal level detecting part is larger than a predetermined value, wherein the frequency setting part sets the high-side local oscillating frequency or the low-side local oscillating frequency for each channel according to the determination result of the signal level determining part.

For example, in a case where the signal level of the receiving signal of the adjacent channel at high side is larger than the predetermined value, and affects the adjacent channel at low side, then the effect may be reduced by the frequency setting part setting the low-side local oscillator frequency. Conversely, in a case where the signal level of the receiving signal of the adjacent channel at low side is larger than the predetermined value, and affects the adjacent channel at high side, then the effect may be reduced by the frequency setting part setting the high-side local oscillator frequency.

As another embodiment of the disclosure, the receiving device comprises a reception condition detecting part, detecting a reception condition of a channel that is to be received. The frequency setting part sets the high-side local oscillating frequency or the low-side local oscillating frequency for each channel according to a detection result of the reception condition detecting part.

As another embodiment of the disclosure, the reception condition detecting part detects the reception condition of the channel to be received according to a carrier to noise (C/N) ratio. In addition, when the signal level determination part determines that a signal level of an adjacent channel is larger than a predetermined value, the frequency setting part sets a local oscillating frequency to being at an opposite side relative to the adjacent channel. And, if a carrier to noise (C/N) ratio does not increase, the frequency setting part changes the local oscillating frequency to being at the same side relative to the adjacent channel.

In the aforementioned configuration, the reception condition detecting part detects a reception condition of a channel to be received, wherein the frequency setting part sets the low-side local oscillating frequency or the high-side local oscillating frequency for each channel according to a detection result of the reception condition detecting part. For example, in a particular channel, the quality of the reception condition of the channel to be received is compared in a state where the high-side local oscillating frequency is set, and a state where the low-side local oscillating frequency is set, and the local oscillating frequency is set to being at the side with the better reception condition. In this way, in a case where being affected due to the signal level of the receiving signal of the adjacent channel being large, then the reception condition should be worse, and that effect can be excluded by changing the local oscillating frequency.

As another state of the disclosure, the receiving device comprises a low-pass filter, passing a mixing signal that mixes a receiving signal and a local oscillating frequency signal. A cut-off frequency of the low-pass filter is changed according to a detection result of the reception condition detecting part.

As another state of the disclosure, the cut-off frequency of the low-pass filter is changed up or down.

The low-pass filter removes the effects of the receiving signal in the band regions other than that of the receiving signal of the adjacent channel that sandwiches the local oscillating frequency by cutting the signal components in a region higher than the components of the receiving signal of the adjacent channel that sandwiches the local oscillating frequency.

The frequency setting part sets the high-side local oscillating frequency or the low-side local oscillating frequency for each channel. In this case, normally, the high-side local oscillating frequency is set for each channel, however in a case where the low-side local oscillating frequency is set for a particular channel, then there is a high probability that the channel is affected by the signal component of the adjacent channel at high side. Therefore, the signal component of the adjacent channel at high side may be cut easier by lowering the cut-off frequency of the low-pass filter more than usual, wherein the low-pass filter passes the mixed signal that mixes the receiving signal and the local oscillating frequency signal. The reception condition is improved in this way.

That is to say, in the aforementioned configuration, the cut-off frequency of the low-pass filter is changed according to the detection result of the reception condition detecting part.

As another embodiment of the disclosure, an attenuation amount of the low-pass filter is changed according to the detection result of the reception condition detecting part

In the aforementioned configuration, the attenuation amount may be changed in addition to the cut-off frequency, therefore in a case where there is a high possibility of being affected by the signal component of the adjacent channel, the signal component of the adjacent channel at high side may be cut easier by increasing the attenuation amount.

As another state of the disclosure, the receiving device comprises a band-pass filter, passing a receiving signal of a desired channel and disposed on a receiving path. A pass frequency of the band-pass filter is changed according to the detection result of the reception condition detecting part.

As another state of the disclosure, a center frequency of the pass frequency of the band-pass filter is changeable. In addition, a range of the pass frequency of the band-pass filter is changeable.

The band-pass filter is interposed to the receiving path since it mainly passes only the receiving signal of the desired channel. Normally, even if the level of the receiving signal of the adjacent channel is large, the effect may be removed by passing the band-pass filter. However, if the level of the receiving signal of the adjacent channel is significantly large, then the effect may not be sufficiently removed by passing the band-pass filter with normal settings.

In the aforementioned configuration, the frequency setting part sets the low-side local oscillating frequency or the high-side local oscillating frequency for each channel. In this case, normally, the high-side local oscillating frequency is set for each channel, however in a case where the low-side local oscillating frequency is set for a particular channel, then there is a high probability that the channel is affected by the signal component of the adjacent channel at high side. Therefore, when the pass frequency of the band-pass filter is narrowed, or set to be shifted slightly lower, then the effect of the signal component of the adjacent channel may be removed when the receiving signal passes the band-pass filter that is interposed to the receiving path. The reception condition can be improved in this way.

As another embodiment of the disclosure, an attenuation amount of the band-pass filter is changed according to the detection result of the reception condition detecting part.

In the aforementioned configuration, the attenuation amount may be changed in addition to the pass frequency, therefore when there is a high possibility of being affected by the signal component of the adjacent channel, then the signal component of the adjacent channel at high side may be cut easier by increasing the attenuation amount.

As another state of the disclosure, the receiving device comprises a plurality of receiving circuit. The frequency setting part sets the local oscillator frequency to the high-side local oscillating frequency or the low-side local oscillating frequency according to combinations of receiving channels in the plurality of receiving circuits.

In a case when a plurality of receiving circuits are included, if each of them attempts to receive on the same channel, normally the local oscillating frequencies are the same. However, when a plurality of local oscillating circuits attempt to oscillate at the same frequency in the receiving device, it cannot avoid shifting slightly, wherein the plurality of oscillator circuits oscillating at slightly shifted local oscillating frequencies adversely affect each other. However, if the high-side local oscillating frequency or the low-side local oscillating frequency can be set with respect to a particular receiving channel, then the two receiving circuits may set different local oscillating frequencies respectively to avoid an adverse effect.

In the aforementioned configuration, the frequency setting part sets the high-side local oscillating frequency or the low-side local oscillating frequency corresponding to the combination of the receiving channels in the plurality of receiving circuits. That is to say, it may be known which combinations have an adverse effect, and in those cases the adverse effects may be prevented by appropriately setting the high-side local oscillating frequency or the low-side local oscillating frequency.

As another embodiment of the disclosure, the receiving device comprises a memory, correspondingly storing combinations of receiving channels in the plurality of receiving circuits and selection results of the high-side local oscillating frequency and the low-side local oscillating frequency. The frequency setting part obtains the selection results from the memory and sets the high-side local oscillating frequency or the low-side local oscillating frequency.

In the aforementioned configuration, the memory correspondingly stores the selection results of the high-side local oscillating frequency and the low-side local oscillating frequency and combinations of receiving channels in the plurality of receiving circuits. Then, the frequency setting part obtains the selection results from the memory, and sets the high-side local oscillating frequency or the low-side local oscillating frequency. That is to say, the selection results corresponding to the combinations of the receiving channels may be read out at a certain point by pre-storing the optimal selection results corresponding to the combinations of the receiving channels, and good reception may be implemented without determining the reception condition.

In this way, with respect to the predetermined receiving band to be received depending on the state, the method of setting the high-side or the low-side local oscillating frequency is not necessarily required to be limited to a tangible device, and it may be easily understood that it also functions as a method. Therefore, it may be a receiving method for receiving a broadcast, and may be a configuration that implements step to set the high-side or the low-side local oscillating frequency with respect to the predetermined receiving frequency band to be received. That is to say, it is not necessarily limited to a tangible device but may also be effective as a method.

The receiving device of the disclosure sets the local oscillating frequency to being at the high-side or the low-side with respect to the predetermined receiving frequency band that is to be received depending on the situation. Therefore, in a case where the signal strength of the adjacent channel is large, or in a case where a plurality of local oscillating circuits are present in a multi-tuner configuration, the reception condition may be improved by a simple configuration.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic block diagram of a hard disk recorder.
FIG. 2 is a block diagram of a tuner.
FIG. 3 is a flow chart for channel set up in the initial settings.
FIGs. 4A to 4C is a diagram illustrating a relationship between a frequency and a signal strength in the present embodiment.
FIGs. 5A to 5C is a diagram illustrating a relationship between a frequency and a signal strength in a conventional tuner.
FIG. 6 is a flow chart for channel set up a channel with an added filter fine tuning.
FIGs. 7A to 7C illustrates a relationship between a frequency and a signal strength in the present embodiment.
FIG. 8 is a flow chart for channel set up for a multi-tuner configuration.
FIG. 9 is a figure illustrating arrays VCO1, VCO2 stored in a memory.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

### Embodiment 1

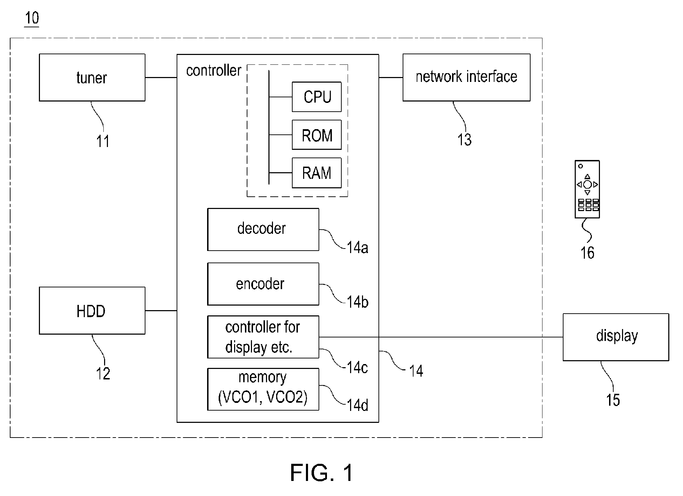

With reference to the drawings, an embodiment of the disclosure is described below. FIG. 1 is a block diagram illustrating a hard disk recorder that adopts a receiving device according to an embodiment of the disclosure. Compound machines that receive television broadcasts and satellite broadcasts, or are capable of recording or playing have been used in recent years. Typically, such compound machine can include a hard disk drive and a blue-ray disk drive in addition to a tuner, and may be connected to a network to perform data communication with other machines. Various forms of viewing and listening of digital media such as distribution, dubbing and playing become possible by data communication.

A hard disk recorder 10 includes a tuner 11, a hard disk drive 12, a network interface 13 and a controller 14. The tuner 11 receives television broadcasts such as ground wave and satellite broadcasting wave, radio broadcasts, and data broadcasts. The hard disk drive 12 records and plays back digital data corresponding to the broadcasting content. The network interface 13 is used to connect to a network. The controller 14 controls the tuner 11, the hard disk drive 12 and the network interface 13, and outputs image and sound to an external display 15. The controller 14 includes a decoder 14a and an encoder 14b which are used when recording/playing back digital data to the hard disk drive 12. The controller 14 further includes a display control part 14c for outputting image and sound according to the data. In addition, the controller 14 includes a memory circuit 14d to store various setting values.

Each function of the controller 14 can be implemented by independent circuits. However, for most cases dedicated LSIs for each function are included and a CPU controls those LSIs to implement those functions. Therefore, the CPU and the ROM or the RAM for implementing the programs thereof are included, and each function is implemented by the hardware and the software. In addition, a remote controller 16 is included for a user to indicate operations.

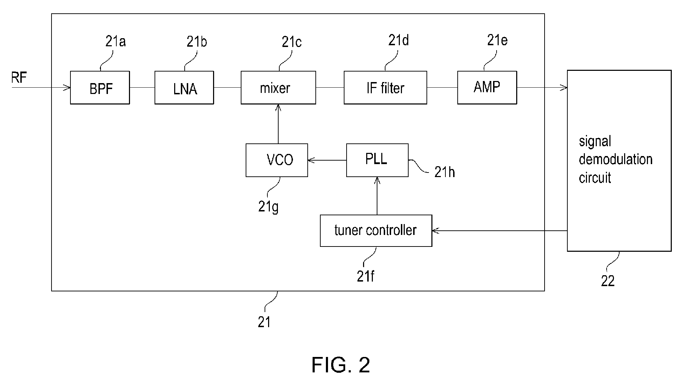

FIG. 2 illustrates a block diagram of a tuner. The tuner 11 includes a tuner part 21 and a signal demodulation circuit 22. The tuner part 21 is a typical circuit structure of superheterodyne, and includes a band-pass filter 21a, a low noise amplifier (LNA: high frequency amplifier) 21b, a mixer (MIX circuit) 21c, a low-pass filter 21d, an intermediate frequency amplifier (AMP) 21e, a tuner controller 21f, a local oscillator (VCO) 21g and a phase lock locked loop (PLL) 21h. In the embodiments, an RF band-pass filter 21a and an IF low-pass filter 21d are used as examples respectively for the band-pass filter 21a and low-pass filter 21d. The RF band-pass filter 21a is connected to an antenna terminal and sets a pass band frequency in the receiving frequency band. The low noise amplifier 21b amplifies an output of the RF band-pass filter 21a. The mixer 21c mixes an output of the low noise amplifier 21b and a local oscillating frequency signal. The IF filter 21 d cuts the excess signal component in an IF signal (intermediate frequency signal) that is outputted by the mixer. The intermediate frequency amplifier (AMP) 21e amplifies the intermediate frequency signal. The tuner controller 21f controls the overall tuner part 21. The local oscillator 21g outputs the local oscillating frequency signal to the mixer 21c. The phase locked loop 21h maintains the local oscillating frequency of the local oscillator 21 g fixed.

The tuner controller 21f obtains information on channels or the receiving frequencies by an IIC bus (abbreviated as I2C), and make the local oscillator 21g oscillate through the phase lock locked loop 21h to generate local oscillating frequency signals corresponding to the information. The tuner part 21 outputs the intermediate frequency signal IF, and the signal demodulation circuit 22 restores the original signal that is included in the intermediate frequency signal IF. In the present embodiment, one the premise of digital broadcasts such as ground wave digital broadcasts, an analog signal modulated by a digital signal may be demodulated, however the property of the original signal is not key point of the disclosure.

The controller 14 controls the signal demodulation circuit 22 to transmit the receiving frequencies and channels, etc. to the tuner part 21 through the IIC bus. In addition, the appearance of the original signal included in the IF signal will vary depending on whether the local oscillating frequency is at a high-side or at a low-side for each channel. Therefore, during demodulation, the action is required to have two variations corresponding to aforementioned cases. These are merely two operation types corresponding to making the local oscillating frequency be at a high-side or a low-side with respect to the receiving frequency band, and such operations may be implemented by a conventional circuit and will not be detailed here.

The hard disk recorder 10 performs a setup process when receiving television broadcasting wave such as ground wave or satellite broadcasting wave. At the moment, it determines whether for each channel the broadcasting wave can be received or not, and the optimal variables for reception are set. In the present embodiment, the local oscillating frequency is also set. For the hard disk recorder 10, each channel of the ground wave digital broadcast is set 6Mhz apart by default, and the local oscillating frequency signal (VCO signal) is at the boundary of the receiving frequency band of each channel, and uses the frequency at the high-side (high frequency side) relative to the receiving frequency band for each channel. Accordingly, as usual, whether the broadcast waves for every channel is present or not is confirmed. If the broadcast waves are present, the VCO signal used for receiving the channel will be fixed to the frequency at the high-side (high frequency side) relative to the receiving frequency band of the channel. In addition, conventionally, fine tuning the frequency of the VCO signal has been proposed, however modifications to the signal demodulation circuit, etc. are required if the frequency of the VCO signal is fine tuned for every channel, and is not easy.

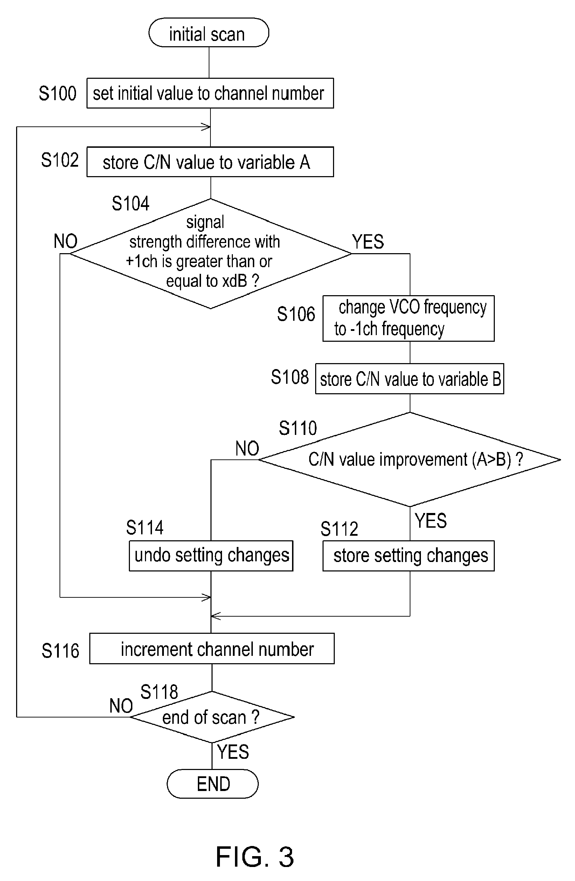

FIG. 3 is a flow chart for channel set up in the initial settings. In the present embodiment, the frequency of the VCO signal is set in addition to conforming the presence of broadcasting wave. The CPU of the controller 14 implements the following process according to the flow chart. In the initial scan of the channel set up, the CPU sets an initial value to the channel number in step S100, and stores a C/N value as a variable A in step S102. When the initial value of the channel number is set, the information is transmitted to the tuner 11, and the signal demodulation circuit 22 in the tuner 11 makes the tuner controller 21f control the phase lock loop (PLL) 21h in a manner that the oscillating frequency corresponds to the channel number. Then, the local oscillator 21g oscillates at a predetermined local oscillator frequency through the phase locked loop 21h. At the same time, the tuner controller 21f also sets a passband frequency to the RF band-pass filter 21a such that the receiving frequency band corresponding to the channel number will pass.

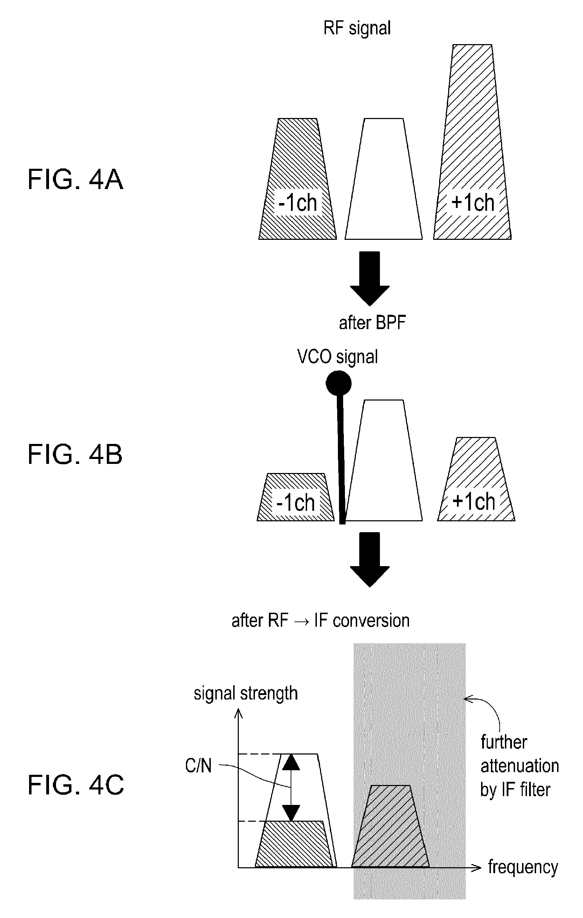

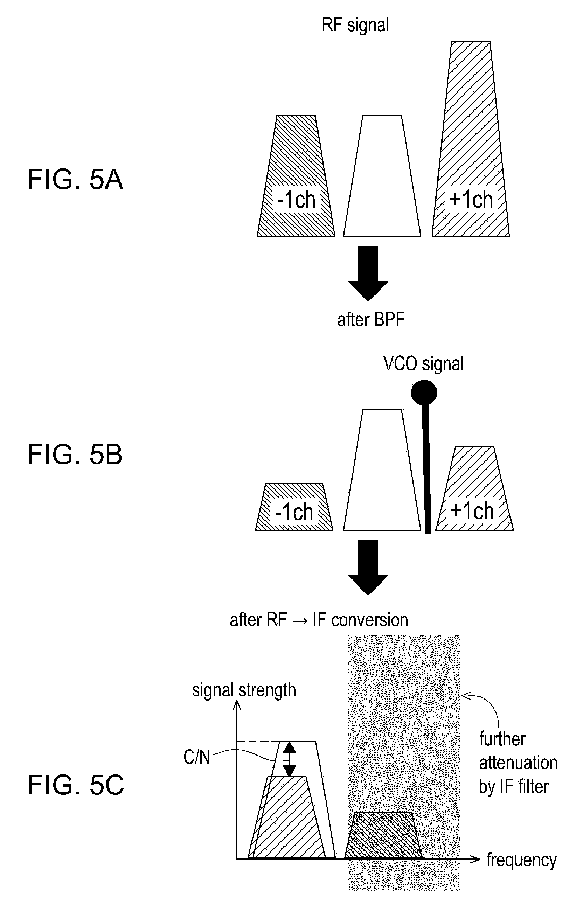

FIG. 4 illustrates a relationship between a frequency and a signal strength in the present embodiment. FIG. 5 illustrates a relationship between a frequency and a signal strength in a conventional tuner. Conventional process of signal reception will be described before describing the process of the present embodiment. Assuming a broadcasting wave is as shown in FIG. 5A. In FIG. 5A, a frequency band of the current channel number is shown at the center, the frequency band of the channel number lower by one channel (-1ch) is shown at the left side, and the frequency band of the channel number higher by one channel (+1ch) is shown at the right side. The RF band-pass filter 21a is a band-pass filter and the receiving frequency band corresponding to the current channel number is set as the pass frequency. Therefore, the receiving signal that has passed through the RF band-pass filter 21a is shown in FIG. 5B. That is to say, the receiving signal in the frequency band of the channel number lower by one channel and the receiving signal in the frequency band of the channel number higher by one channel are attenuated, and the signal strengths thereof are reduced. Furthermore, the receiving signal is amplified by the low noise amplifier 21b and is made equivalent to the signal level of the local oscillating frequency signal. Then, when the receiving signal and the local oscillating frequency signal are inputted to the mixer 21c, the IF signal shown in FIG. 5C is outputted from the mixer 21c by the heterodyne process. In addition, in this case, the local oscillating frequency is set at the boundary of the current channel number and the channel number higher by one channel. In other words, the local oscillating frequency is a frequency higher than the receiving frequency band corresponding to the current channel number. In addition, the "VCO signal" labeled in the figure, namely the patterns shown by the circle and line are merely to show a location of the set VOC frequency, and is not, for example, to show the signal strength through the length of the line.

Among the receiving signals that are converted to intermediate frequencies, the receiving signal corresponding to a channel number that is lower than the current channel number by 1 channel becomes a frequency band separated from the local oscillating frequency by 2 channels, and does not overlap with the receiving signal corresponding to the current channel number. However, the receiving signals corresponding to the current channel number and a channel number higher by one channel are band regions that sandwich the local oscillating frequency, and therefore will be overlapped when converted to an intermediate frequency.

Even in this case, by passing the RF band-pass filter 21a in advance, the components other than the receiving frequency band corresponding to the current channel number are attenuated. Therefore, in the state of being converted to the intermediate frequency, a significant problem will not occur even if the signals of the current channel number and the channel number higher by one channel are overlapped. In other words, the signal component corresponding to the channel number higher by one channel is merely equivalent to a noise with respect to the signal component corresponding to the current channel number. Therefore, the signal component may be processed by suitable noise process.

However, in practice, there are cases that the signal component of an adjacent channel is larger than expected. In the example shown in FIGs. 5A-5C, the broadcasting wave of the channel number higher by one channel is too large. Therefore, even though the signal strength is attenuated by the RF band-pass filter 21a, the signal strength is still maintained at a strength comparable to the broadcasting wave corresponding to the current channel number. As such, the reception result is adversely affected since the C/N ratio is not small when being converted to an intermediate frequency. In a case that the digital signal is modulated, an adverse effect will appear thereafter in the bit error rate.

Initial values for the channel numbers are set in step S100. At the time when the C/N value is stored to the variable A in step S102, the frequency of the VCO signal is set to a frequency at the boundary between the frequency band of the current channel number and the frequency band of the channel number higher by one channel. In addition, the C/N value is calculated by the signal demodulation circuit 22, and the CPU obtains the C/N value. Next, in step S104, the CPU determines whether the signal strength difference with the +1 channel is greater than or equal to xdB. In other words, the signal strength of the receiving frequency band of the current channel number and the signal strength of the receiving frequency band of the channel number higher by one channel are obtained. Then the difference between the signal strengths is calculated, and it is determined whether or not the difference between the signal strengths is greater than or equal to x dB.

Here, in a state where the frequency of the VCO signal is set to a high-side frequency relative to the current channel number, the signal strength of the channel number higher by one channel (refer to -1ch), which influence is a large enough as an adjacent channel, is notable. In a case when the signal strength is too strong, the frequency of the VCO signal may be set to a low-side frequency relative to the current channel number to attempt to improve the reception condition as depicted below. The CPU changes the VCO frequency to the frequency lower by one channel (-1ch) in step S106, and stores a C/N value to a variable B in step S108. In other words, the VCO signal corresponds to the channel number lower than one channel relative to the current channel number, and therefore the frequency at the boundary between the frequency band of the current channel number and the frequency band of the channel number lower by one channel lower is set as the frequency of the VCO signal. In addition, the term boundary here does not mean a boundary in the strict sense, but merely refers to an interval in or between two frequency bands.

The conversion process of the receiving signal in this state is shown in FIG. 4. Suppose the broadcasting wave is present as shown in FIG. 4A, the RF band-pass filter 21a is a band-pass filter where the receiving frequency band corresponding to the current channel number is set as the pass frequencies. Therefore, the receiving signal that passes through the RF band-pass filter 21a is as shown in FIG. 4B. The receiving signal in the frequency band of the channel number lower by one channel and the receiving signal in the frequency band of the channel number higher by one channel higher are attenuated, and these signal strengths are reduced. After the receiving signal is amplified by the low noise amplifier 21b and becomes equivalent to the signal level of the local oscillating frequency signal, the receiving signal and the local oscillating frequency signal are inputted to the mixer 21c. In addition, regarding the "VCO signal" labeled in the figure, i.e., the patterns shown by circle and line are merely to show a location of the set VOC frequency, and is not, for example, to show the signal strength through the length of the line.

At this time, the local oscillating frequency is set to a frequency lower than the frequency band corresponding to the current channel number, therefore the receiving signal of the channel number higher by one channel relative to the current channel number becomes a frequency band separated from the local oscillating frequency by 2 channels, and does not overlap with the receiving signal corresponding to the current channel number. That is to say, even if the signal strength is large, the receiving signals of the current channel number and the channel number higher by one channel will not overlap. As a result, the IF signal shown in FIG. 4C is outputted from the mixer circuit 21c by the heterodyne process.

Instead of the receiving signal of the channel number higher by one channel which has a large signal strength, it overlaps with the component of the receiving signal of the channel number lower by one channel which has a signal strength of a normal level. However, the strength of the receiving signal is sufficiently attenuated by the RF band-pass filter 21 a, therefore the C/N value is a sufficiently low value in the expected range. Then, in step S110, the CPU determines whether the C/N value has improved (A>B) or not. As mentioned above, the C/N value is improved in the examples shown in FIG. 4A and FIG. 5A, therefore the setting changes are saved in step S 112. The setting changes in this case is a process of changing the VCO frequency to the -1ch frequency as performed in step S106. The CPU stores to the memory 14d that the broadcasting wave corresponding to the current channel number is present and the VCO frequency is changed to the -1ch frequency when receiving this channel number.

On the other hand, in step S104, even when it is determined that the signal strength difference with the +1ch to be greater than or equal to xdB, there are cases where the C/N value has not improved (A>B) in the result. For example, the C/N value may not be improved (A>B) due to other reasons that will be described later. In such case, the setting changes are undone in step S 114. More specifically, the process of changing the frequency of the VCO signal to the frequency of the -1ch that is performed in step S106 is undone, and the frequency of the VCO signal is restored to the frequency of the region at the boundary between the frequency band of the current channel number and the frequency band of the channel number higher by one channel.

Then, the CPU increments the channel number (+1) in step S116, and repeats the processes in steps S102-S116 until it is determined that the final channel number has been exceeded and the scan should be ended in step S118. The IF signal with an improved C/N value is outputted from the mixer 21c and passes through the low-pass filter of the IF filter 21d according to the aforementioned processes that the frequency of the VCO signal is set to a frequency as usual or the frequency corresponding to the channel number lower by one channel. As shown in FIG. 4c and FIG. 5c, the IF filter 21d determines a cut-off frequency such that the frequency components that are higher than the frequency band of the current channel number are attenuated. Therefore, frequency components other than the frequency components of the frequency band desired to be received are further reduced, and the improvement in the C/N value also increases. The cut-off frequency affects the subsequent signal processing which will be described later.

In addition, in the aforementioned embodiment, the frequency of the VCO signal is set to the frequency at the boundary between the frequency band of the current channel number and the frequency band of the channel number higher by one channel. However, in contrast, the frequency of the VCO signal can be set to a frequency at the boundary between the frequency band of the current channel number and the frequency band of the channel number lower by one channel. The boundary in this case is not in the strict sense, but it may be considered whether the high-side frequency or the low-side frequency based on the frequency band of the current channel number. In this case, the VCO signal that should be set to the low-side frequency may be set to the high-side frequency according to the signal strength of the adjacent channel, and the same effect can be also achieved. In other words, the case where the signal strength of the adjacent channel is too large may be coped with by reversely setting the high-side frequency and the low-side frequency.

As mentioned above, a predetermined receiving frequency band is set for each channel as represented by a ground wave digital broadcast, and the local oscillating frequency corresponding to each channel between the receiving frequency bands is set. Then, after performing the processes in steps S100-S118, the high-side or the low-side local oscillating frequency is set for each channel. The frequency setting part is configured in this way.

In the present embodiment, the channel and the receiving frequency band are corresponded to each other, however if it is a receiving device that receives broadcasts such as a superheterodyne system, there is no difference to set the local oscillation frequency to the high-side frequency or the low-side frequency for the predetermined receiving frequency band to be received. In particular, in the aforementioned embodiment, step S104 determines whether the difference in signal strength with the channel number higher by one channel is greater than or equal to xdB. This process is equivalent to an signal level detecting part and a signal level determining part. The signal level detection part detects the signal level of the received signal of the adjacent channel with respect to the channel that is to be received. The signal level determining part determines whether the signal level detected by the signal level detection part is greater than a predetermined value.

Then, because the VCO frequency is changed to the frequency of the channel number lower by one channel in step S106, the frequency setting part performs the process for setting the high-side or the low-side local oscillating frequency for each channel based on the determination result of the signal level determining part. The C/N value represents the reception condition of the channel to be received, therefore the process of obtaining the C/N value and determining whether improvement is present in step S110 is equivalent to a reception condition detecting part that detects the reception condition. Then, storing the setting changes in step S 112 or undoing the setting changes in step S 114 according to whether improvement is present, is equivalent to the process of setting the high-side or the low-side local oscillating frequency for each channel based on the detecting result of the reception condition detecting part. That is to say, the aforementioned is equivalent to the frequency setting part.

### Embodiment 2

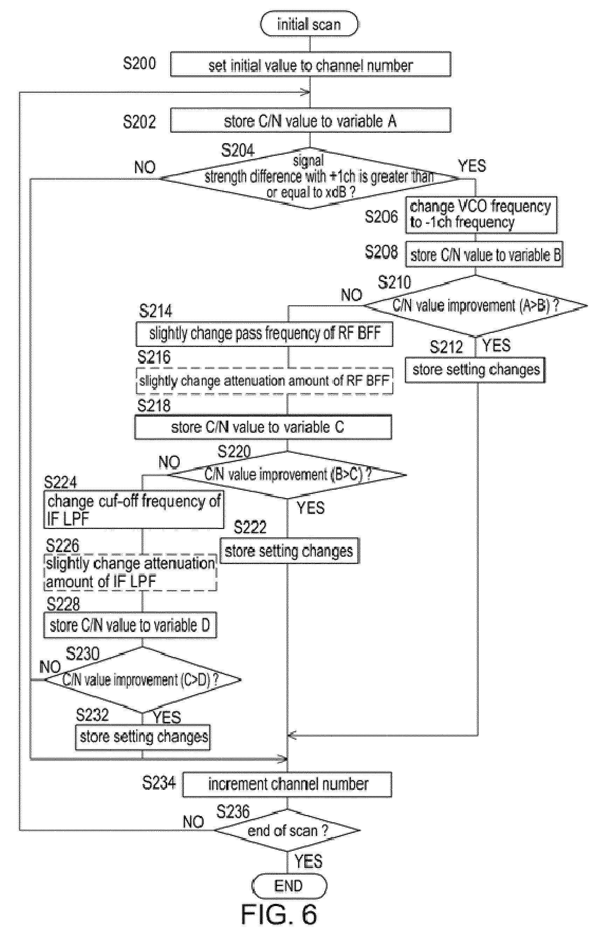

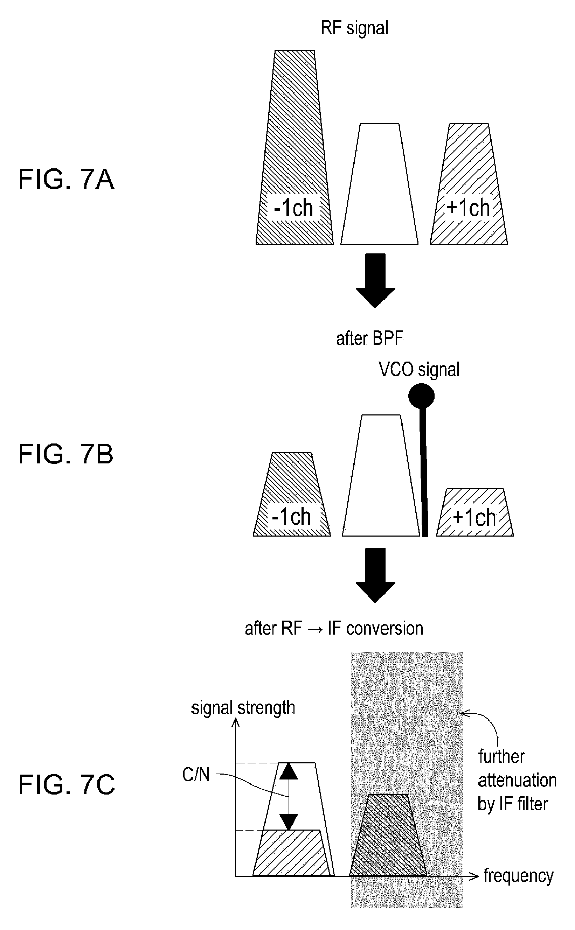

In the aforementioned embodiment, the frequency of the VCO signal is changed to avoid being affected by an adjacent channel, however the reception condition may be improved by further fine tuning the filters. FIG. 6 is a flow chart for channel set up that adds a filter fine-tuning process. FIG. 7 is a diagram illustrating a relationship between a frequency and a signal strength in the present embodiment.

The processes in steps S200-S212 are no different from the processes in steps S100-S112 and therefore description will be omitted. When the signal strength difference with the adjacent channel is large (step S204) and when the receiving condition is not improved by changing the VCO frequency to the lower side by one channel (step S210), the reception condition may be further improved by fine tuning the RF band-pass filter 21a and the IF low-pass filter 21d in the present embodiment.

First, the CPU slightly changes the pass frequency band of the RF band-pass filter 21a (RF BPF) in step S214. In the present embodiment, the pass frequency band is slightly changed, however the attenuation amount of the RF band-pass filter 21a may also be slightly changed as shown by the broken line in step S216. Then, the C/N value for that the character of the RF band-pass filter 21a is slightly changed is stored to a variable C in step S218, and whether the C/N value has improved (B>C) is determined in step S220. The improvement here refers to the comparison with the variable B that refers to the C/N value after changing the frequency of the VCO signal. Then, if the C/N value is improved, the setting changes are saved in step S222.

That is to say, even though the reception condition is not improved by changing the frequency of the VCO signal, if the reception condition is improved by fine tuning the RF band-pass filter 21a, then the change in the frequency of the VCO signal, including the fine tuning, may be saved as the settings. In addition, the target for improvement may be A, which is the C/N value before changing the frequency of the VCO signal. In addition, the comparison between the adjustment and the presence of improvement may be implemented by feedback control of the slight change in the pass frequency and the improvement of the C/N value, and an optimal value is obtained. Then, the optimal value can be compared with previous C/N values.

The condition of the signal attenuation of the adjacent channel due to fine tuning the RF band-pass filter 21a is shown in FIGs. 7A and 7B. The signal strengths of the left side and the right side receiving signals are reduced with respect to the receiving signal of the current channel number at the center. As a method of fine tuning the RF band-pass filter 21a, the center frequency of the pass frequency band may be changed or the range of the pass frequency band may be changed. In addition, the "VCO signal" labeled in the figure, namely the patterns shown by the circle and the line are merely to show a location of the set VOC frequency, and is not, for example, to show the signal strength through the length of the line.

If there is no improvement by fine tuning the RF band-pass filter 21a, the CPU changes a cut-off frequency of the IF filter 21d (IFLPF) in step S224. In the present embodiment, the cut-off frequency is changed, however the attenuation amount of the IF filter 21 d (IFLPF) may also be slightly changed as shown by the broken line in step S226. Then, the C/N value for that the character of t IF filter 21d is slightly changed is stored to a variable D in step S228, and whether the C/N value has improved (C>D) is determined in step S230. The improvement here refers to the comparison with C, which is the C/N value after fine tuning the RF band-pass filter 21 a. Then, if the C/N value is improved, the setting changes are saved in step S232.

That is to say, even though the reception condition is not improved by fine tuning the RF band-pass filter 21a in addition to changing the frequency of the VCO signal, if the reception condition is improved by fine tuning the IF filter 21d, then the change in the frequency of the VCO signal including the fine tuning may be saved as the setting. In addition, the target for improvement may be A, which is the C/N value before changing the frequency of the VCO signal. In addition, the comparison of the adjustment and the presence of improvement may be implemented by feedback control of the slight change of the cut-off frequency and the improvement of the C/N value, and an optimal value is obtained. Then, the optimal value can be compared with previous C/N values.

The condition of signal attenuation of the adjacent channel by fine tuning the IF filter 21d is shown in FIG. 7D. The signal strength of the receiving signal of the channel number lower by one channel is reduced. In this example, because the signal strength of the channel number lower by one channel is large, it is effective to change the cut-off frequency of the IF filter 21d in order to remove the adverse influence. In addition, as a method of fine tuning, the cut-off frequency may be changed up or down or the attenuation amount may be changed in addition to the cut-off frequency.

The present embodiment includes the IF filter (IF low-pass filter) 21d that passes a mixing signal (IF signal) that mixes the receiving signal (RF signal) and the local oscillating frequency signal (VCO signal). The cut-off frequency of the IF filter 21d may be changed, and one the premise that uses the determination result of whether improvement in the reception condition is present or not in step S220, the cut-off frequency of the IF filter 21d is changed in step S214. Of course, the frequency may be changed for improving the reception condition, or changing the frequency may be determined according to whether improvement is present or not before and after the frequency is changed. Therefore, it may be said that these cases are based on the detection result of the reception condition detecting part.

In addition, in the case that the attenuation amount of the IF filter 21d is changeable, and on the premise that uses the detection result of the reception condition detecting part in step S220, the attenuation amount of the IF filter 21d may be changed in step S216. In this case, the attenuation amount may be changed for improving the reception condition, or changing the attenuation amount may be determined according to whether improvement is present or not before and after the attenuation amount is changed. Therefore, it may be said that these cases are based on the detection result of the reception condition detection part.

the fine tuning of the RF band-pass filter 21a is similar to the aforementioned way. In the present embodiment, the RF band-pass filter 21a is included to pass the receiving signal of the desired channel on the receiving path, and the pass frequency of the RF band-pass filter 21a is changeable. Then, one the premise that uses the determination result of whether the reception condition is improved or not in step S230, the pass frequency of the RF band-pass filter 21a is changed. Here, the pass frequency may be changed for improving the reception condition, or changing the pass frequency may be determined according to whether improvement is present or not before and after the pass frequency is changed. Therefore, it may be said that these cases are based on the detection result of the reception condition detecting part.

In addition, in the case that the attenuation amount of the RF band-pass filter 21a is changeable, one the premise that uses the detection result of the reception condition detecting part in step S220, the attenuation amount of the RF band-pass filter may be changed in step S226. In this case, the attenuation amount may be changed for improving the reception condition, or changing the attenuation amount may be determined according to whether improvement is present or not before and after the attenuation amount is changed. Therefore, it may be said that these cases are based on the detection result of the reception condition detecting part.

Then, the CPU increments (+1) the channel number in step S234, and repeats the processes in steps S202-S232 until it is determined that final channel number has been exceeded and the scan should be ended in step S236. As aforementioned, an additional effect can be achieved by making the frequency of the VCO signal changeable according to the channel number.

### Embodiment 3

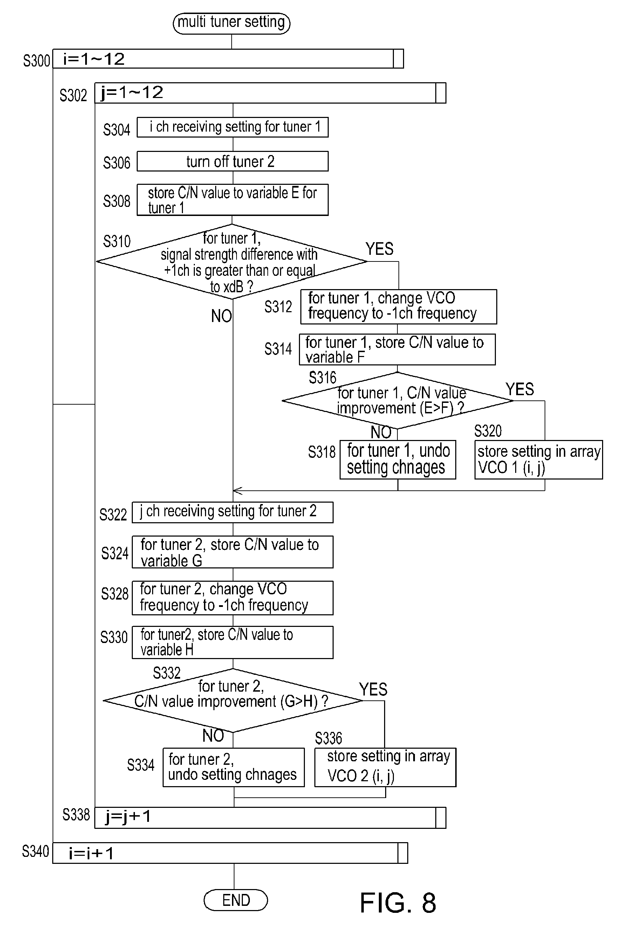

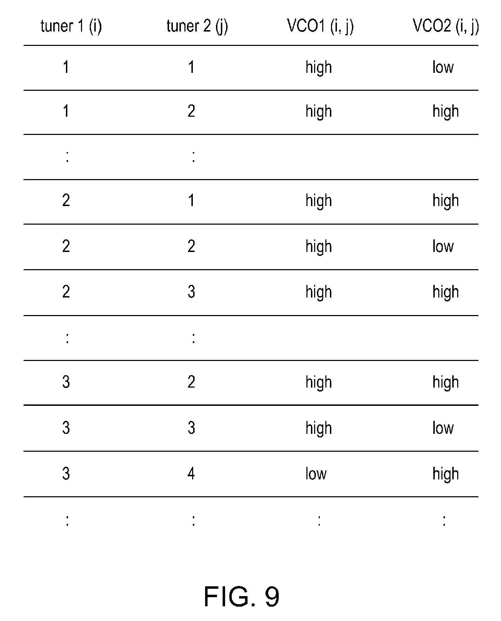

Next, in the third embodiment, a plurality of local oscillators 21g are included in a tuner which is a multi-tuner configuration. When a plurality of the local oscillators 21 g are included and disposed at relatively close locations in the same set, the plurality of local oscillators 21g oscillate at the same local oscillating frequency when the broadcasting waves of the same channels are to be received, and therefore these local oscillators 21g affect each other adversely. FIG. 8 is a flow chart for channel set up when the multi-tuner configuration is adopted. FIG. 9 is illustrates arrays VCO1, VCO2 stored in a memory circuit.

When adopting the multi-tuner configuration, an adverse receiving state depending on the combination of the oscillation frequency of the local oscillator 21g is expected due to the combination of the receiving channel with a plurality of tuners. Therefore, all of the combinations are received beforehand, and the frequency of the VCO signal is changed depending on the receiving state. The present embodiment illustrates an example of two tuners 11, and uses variables i, j to nest a loop process to implement all of the channel combinations. In addition, even though tuner 11 is configured to include more than two, variables can be further added to nest the loop process.

In step S300 and step S340, the variable i is incremented sequentially in the range of i = 1 to 12, and the process is ended when i exceeds 12. In addition, in step S302 and step S338, the variable j is incremented sequentially in the range of j = 1 to 12 while keeping the variable i constant, the variable i is incremented by 1 while the variable j exceeds 12, and then the process is repeated until the variable i exceeds 12. A certain process is performed within a range is also referred as looping.

The CPU sets the reception of i channel i to the tuner 1 in step S304. The variable i is incremented sequentially from i = 1 until 12. Therefore, at the beginning, the variable i is 1. Next, the CPU turns off the tuner 2 in step S306. Here, it is required that at least make the local oscillator 21g does not oscillate. In addition, it is acceptable if the oscillation does not affect other local oscillator, and as long as the frequency does not affect other local oscillator, even if oscillation does occur.

The processes in steps S308-S318 are the same as the processes in steps S102-S112. When the signal strength of an adjacent channel is large (step S310), the frequency of the VCO signal is changed to a frequency corresponding to a channel number lower by one channel (step S312), and if the receiving condition is improved (step S316), then the settings are reserved (step S320), and the settings are undone if not improved (step S318).

At the moment, the tuner 2 is turned off, however the variable j is used as the channel number of the tuner 2. The initial value is 1. The array VCO1(i, j), having a two dimensional argument, stores the settings. In the combination of the receiving channels of the tuner 1 and the tuner 2, the tuner 1 is preferentially set, and then the tuner 2 is set.

Therefore, when the setting is saved to the array VCO1 (i, j) in step S320, the reception settings for the tuner 2 is performed in step S322-S336. The processes in steps S322-S336 are basically the same as the processes in steps S102-S112. However, a difference is in the reception environment where the tuner 1 is already set to receive the i channel.

First, the CPU is set to receive the channel j in the tuner 2 in step S322. More specifically, the local oscillator 21g is made to oscillate at the frequency of the VCO signal corresponding to the channel j. Then, for the tuner 2, the C/N value is stored to a variable G in step S324. The tuner 2 needs to be set to exclude the effect based on the combination with the tuner 1, and therefore the frequency of the VCO signal for the tuner 2 is changed to a frequency corresponding to a channel number lower by one channel in step S328 regardless of the signal level of the adjacent channel. Then, for the tuner 2, after the C/N value is stored to the variable H in step S330, it is determined whether the C/N value has improved (G>H) or not for the tuner 2 in step S332.

For example, when i is 1 and j is 1, the tuner 2 is turned off at the beginning, and the frequency of the VCO signal for the tuner 1 is set as expected. The tuner 2 is set next, however there is a high possibility that the reception environment may be subject to an adverse effect by the two local oscillators 21g oscillating at substantially the same frequency at the same time because the tuner 1 and the tuner 2 are set to the same channel 1. Therefore, it may be assumed that the reception condition may be improved when the frequency of the VCO signal is changed to a frequency corresponding to the channel number lower by one channel in step S328. As a result, the settings after being changed are saved to the array VCO2 (i, j) in step S336. Of course, the results are not guaranteed to be the same when the same channel is received. This is due to being subject to other influence of the reception environment. Therefore, there are cases where it is better to use the same frequency as the VCO signal. In that case, the setting changes are undone for the tuner 2 in step S334.

By executing the aforementioned loop process, all of the possible channel combinations of the tuner 1 and the tuner 2 are implemented, and the tuner 1 may be set to the array VCO1 (i, j) and the tuner 2 may be set to the array VCO2 (i, j) for the respective combination.

FIG. 9 shows the values of the VCO signals that are set for the arrays VCO1(i, j) and VCO2(i, j) with using the channel numbers of the tuner 1 and the tuner 2 as arguments. In the figure, the high-side or the low-side relative to the receiving frequency band are represented by "high" or "low" for the frequency of the VCO signal. If process of the initial settings is complete, and then the arrays VCO1(i j), VCO2(i, j) are referred to determine whether the VCO signals are set at the high-side or at the low-side for the tuner 1 and the tuner 2, and the optimal reception condition for the combinations of channel numbers at that time can be instantly implemented and set.

As described above, when a plurality of receiving circuits are included such as the tuner 1 and the tuner 2, by the processes in steps S300-S340, the high-side or the low-side local oscillating frequency is set for each receiving circuit according to the combination of receiving channels in the plurality of receiving circuits. Therefore, it is corresponding to the frequency setting part.

In addition, the array VCO1(i, j) and the array VCO2(i, j) are equivalent to a memory that correspondingly stores the combinations of receiving channels in the plurality of receiving circuits and selection results of the high-side and the low-side local oscillating frequency. The frequency setting part is implemented by performing a process that obtains the selection result from the memory and then setting the high-side or the low-side local oscillating frequency. Therefore, the optimal receiving condition may be implemented.

Needless to say, the invention is not limited to the embodiments described above. It should be understood by those skilled in the art that the following is disclosed as one embodiment of the invention.

Mutually substitutable members, configurations, etc. disclosed in the embodiment can be used with their combination altered appropriately.

Although not disclosed in the embodiment, members, configurations, etc. that belong to the known technology and can be substituted with the members, the configurations, etc. disclosed in the embodiment can be appropriately substituted or be used by altering their combination.

Although not disclosed in the embodiment, members, configurations, etc. that those skilled in the art can consider as substitutions of the members, the configurations, etc. disclosed in the embodiment are substituted with the above mentioned appropriately or are used by altering their combination.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims and their equivalents.

### Reference of numerals

10: hard disk recorder
11: tuner
12: hard disk driver
13: network interface
14: controller
14a: decoder
14b:encoder
14c: controller for display etc.
14d: memory
15: display
16: remote controller
21: tuner part
21a: RF band-pass filter (RF BPF)
21b: low noise amplifier (LNA)
21c: mixer (MIX)
21d: IF filter (low pass filter, LPF)
21e: intermediate amplifier
21f: tuner controller
21g: local oscillator (VCO)
21h: phase locked loop (PLL)
22: signl demodulation circuit

## Claims

1. A receiving device (21), receiving broadcasts, **characterized in that** the receiving device (21) comprises:
a frequency setting part (14, 21g, 21f), configured to set a high-side local oscillating frequency or a low-side local oscillating frequency with respect to predetermined receiving frequency bands to be received.

2. The receiving device (21) as claimed in claim 1, **characterized in that** the predetermined frequency band is set for each channel, a local oscillating frequency corresponding to the each channel is set in or between the frequency bands,
the frequency setting part (14, 21g, 21f) is configured to set the local oscillating frequency to a low-side or the local oscillator frequency to a high-side for each channel.

3. The receiving device (21) as claimed in claim 1 or 2, **characterized in that** the receiving device (21) comprises:
a signal level detecting part (14, 21f), configured to detect a signal level of a receiving signal of an adjacent channel with respect to a channel to be received;
a signal level determining part (14, 21f), configured to determine whether the signal level detected by the signal level detecting part (21) is larger than a predetermined value,
wherein the frequency setting part (14, 21g, 21f) is configured to set the high-side local oscillating frequency or the low-side local oscillating frequency for each channel according to a determination result of the signal level determination part (21).

4. The receiving device (21) as claimed in claim 3, **characterized in that** when the signal level determination part (14, 21f) determines that the signal level of the adjacent channel is larger than the predetermined value, the frequency setting part (14, 21g, 21f) is configured to set the local oscillating frequency to being at an opposite side relative to the adjacent channel.

5. The receiving device (21) claimed in any one of claims 2-4, **characterized in that** the receiving device comprises a reception condition detecting part (14, 21f), configured to detect a reception condition of a channel that is to be received, and
the frequency setting part (14, 21g, 21f) is configured to set the high-side local oscillating frequency or the low-side local oscillating frequency for each channel according to a detection result of the reception condition detecting part (14, 21f).

6. The receiving device (21) as claimed in claim 5, characterize in that the reception condition detecting part (14, 21f) is configured to detect the reception condition of the channel to be received according to a carrier to noise (C/N) ratio.

7. The receiving device (21) as claimed in claim 5 or 6, **characterized in that** the receiving device (11) comprises:
a low-pass filter (21d), configured to pass a mixing signal that mixes a receiving signal and a local oscillating frequency signal,
a cut-off frequency of the low-pass filter (21d) is configured to be changed according to a detection result of the reception condition detecting part (14, 21f).

8. The receiving device (21) as claimed in claim 7, **characterized in that** the cut-off frequency of the low-pass filter (21d) is changed up or down.

9. The receiving device (21) as claimed in claim 7 or 8, **characterized in that** an attenuation amount of the low-pass filter (21d) is configured to be changed according to the detection result of the reception condition detecting part (14, 21f).

10. The receiving device (21) as claimed in any one of claims 5-9, **characterized in that** the receiving device (21) comprises:
a band-pass filter (21a), configured to pass a receiving signal of a desired channel and disposed on a receiving path,
wherein a pass frequency of the band-pass filter (21a) is configured to be changed according to the detection result of the reception condition detecting part (14, 21f).

11. The receiving device (21) as claimed in claim 10, wherein a center frequency of the pass frequency of the band-pass filter is changeable.

12. The receiving device as claimed in claim 10 or 11, wherein a range of the pass frequency of the band-pass filter is changeable.

13. The receiving device (21) as claimed in any one of claims 10-12, **characterized in that** an attenuation amount of the band-pass filter (21a) is configured to be changed according to the detection result of the reception condition detecting part (14, 21f).

14. The receiving device (21) as claimed in any one of claims 2-13, **characterized in that** the receiving device (21) comprises:
a plurality of receiving circuit,
wherein the frequency setting part (14, 21g, 21f) is configured to set the local oscillator frequency to the high-side local oscillating frequency or the low-side local oscillating frequency according to combinations of receiving channels in the plurality of receiving circuits.

15. The receiving device as claimed in claim 14, **characterized in that** the receiving device (21) comprises:
a memory (14d), configured to correspondingly store the combinations of receiving channels in the plurality of receiving circuits and selection results of the high-side local oscillating frequency and the low-side local oscillating frequency,
wherein the frequency setting part (14, 21 g, 21f) is configured to obtain the selection results from the memory (14d) and sets the high-side local oscillating frequency or the low-side local oscillating frequency.
